# EUROPÄISCHE PATENTSCHRIFT

(11) **EP 1 065 488 B1**
(45) Veröffentlichungstag und Bekanntmachung des Hinweises auf die Patenterteilung: **28.02.2007**
(21) Anmeldenummer: 99112538.6
(22) Anmeldetag: 01.07.1999
(51) Int. Cl.: G01L 13/02, G01L 9/00

(54) **Relativdrucksensor**
Relative pressure sensor
Capteur de pression relative

(43) Veröffentlichungstag der Anmeldung: 03.01.2001
(73) Patentinhaber: Endress + Hauser GmbH + Co. KG, 79689 Maulburg (DE)
(72) Erfinder: Flögel, Karl, Dipl.-Ing, 79650 Schopfheim (DE)
(74) Vertreter: Redding, Anke

(56) Entgegenhaltungen:
- EP-A- 0 524 550
- US-A- 4 212 209
- US-A- 4 425 799

## Beschreibung

Die Erfindung betrifft einen Relativdrucksensor.

In der Druckmeßtechnik wird zwischen Differenz-, Absolut- und Relativdrucksensoren unterschieden. Differenzdrucksensoren dienen der Messung der Differenz zwischen zwei verschiedenen Drücken. Bei Absolutdrucksensoren wird ein zu messender Druck absolut, d.h. als Druckunterschied gegenüber einem Vakuum erfaßt. Mit einem Relativdrucksensor wird ein zu messender Druck in Form eines Druckunterschiedes gegenüber einem Referenzdruck aufgenommen. Der Referenzdruck ist ein Umgebungsdruck der dort herrscht, wo sich der Sensor befindet. Bei den meisten Anwendungen ist dies der Atmosphärendruck am Einsatzort. Relativdrucksensoren weisen üblicherweise eine Meßkammer auf, die mit einer druckempfindlichen Meßmembran verschlossen ist. Auf eine Außenseite der Meßmembran wirkt im Betrieb der zu messende Druck ein. Auf einer meßmembran-abgewandten Seite weist die Kammern eine Öffnung auf, durch die der Referenzdruck im Inneren der Kammer an der Meßmembran anliegt. Es ist ein Wandler vorgesehen, der eine vom Referenzdruck und vom zu messenden Druck abhängige Auslenkung der Meßmembran in eine elektrische Meßgröße umwandelt.

Ein Nachteil solcher Sensoren besteht darin, daß durch die der Zufuhr des Referenzdrucks dienende Öffnung Verunreinigungen und/oder Feuchtigkeit in die Meßkammer gelangen können, die die Meßgenauigkeit beeinträchtigen. Verunreinigungen können z.B. in der Luft enthaltene Staubpartikel sein oder aber auch am Einsatzort vorhandene aggressive oder ätzende Schwebstoffe, die sich in der Kammer ablagern können. Ist die Temperatur in der Umgebung höher als die Temperatur im Inneren der Kammer, so kann im Inneren der Kammer der Taupunkt unterschritten werden und es bildet sich Kondesat.

Elektromechanische Wandler, wie sie zur Erfassung der Auslenkung der Meßmembran erforderlich sind, sind in der Regel sehr empfindlich gegenüber Verunreinigungen und/oder Feuchtigkeit.

In der EP-B 524 550 ist ein Relativdrucksensor beschrieben mit
- einer gasgefüllten Meßkammer,
   -- die mit einer druckempfindlichen Meßmembran verschlossen ist,
   -- auf deren Außenseite im Betrieb ein zu messender Druck einwirkt, und
- einem Wandler zur Umwandlung einer vom zu messenden Druck abhängigen Auslenkung der Membran in eine elektrische Meßgröße.

Neben der Meßkammer ist eine weitere gasgefüllte Kammer vorgesehen, die mit einer weiteren druckempfindlichen Membran verschlossen ist, auf deren Außenseite im Betrieb der Referenzdruck einwirkt. Zur Umwandlung einer druckabhängigen Auslenkung dieser weiteren Membran in eine elektrische Größe ist ein zweiter Wandler vorgesehen. Die Meßkammer und die weitere Kammer sind über eine Leitung miteinander verbunden. Das Volumen der beiden Kammern ist jedoch ausreichend groß, so daß die Auslenkungen der Meßmembran und der weiteren Membran weitgehend unabhängig voneinander sind. Der Relativdrucksensor besteht also effektiv aus zwei getrennten Sensoren, von denen einer den zu messenden Druck und einer den Referenzdruck aufnimmt. Die unabhängig voneinander bestimmten Meßgrößen werden nachfolgend zur Ermittlung des Relativdrucks miteinander verknüpft.

Ein Nachteil eines solchen Relativdrucksensors besteht darin, daß zwei Wandler erforderlich sind, um den Referenzdruck und den zu messenden Druck unabhängig voneinander zu erfassen. Dies bedeutet einen höheren Aufwand und höhere Kosten bei der Herstellung.

Ein weiterer Nachteil besteht darin, daß beide Kammern zur Entkopplung der beiden Sensoren ein großes Innenvolumen aufweisen. Entsprechend groß ist die darin enthaltene Gasmenge. Der Druck im Inneren der Kammern erhöht bzw. erniedrigt sich mit der Temperatur. Ein höherer bzw. niedrigerer Druck im Inneren führt zu einer Auslenkung der beiden Membranen und zu Meßfehlern. Je kleiner zumindest einer der zu bestimmenden Drücke ist, desto stärker wirkt sich diese Fehlerquelle aus. Es gehen bei dieser Form der Relativdruckbestimmung die Meßfehler beider Druckmessungen kumulativ ein.

In der US-A 4,425,799 ist ein Differenzdrucksensor mit zwei ölgefüllten über eine Leitung mit einander verbundenen Kammern beschrieben. Jede Kammer ist mit einer druckempfindlichen Membran verschlossen. An jeder Membran liegt im Betrieb einer der Drücke an, deren Differenz gemessen werden soll. Das Öl dient als Druckübertrager und weist einen deutlich geringeren thermischen Ausdehnungskoeffizienten auf als Luft. Es ist somit nur ein Wandler erforderlich, der die vom Differenzdruck abhängige Auslenkung einer der beiden Membranen erfaßt und in eine elektrische Größe umwandelt.

Es gibt jedoch eine Vielzahl von Anwendungen, bei denen aus Sicherheitsgründen keine ölgefüllten Sensoren eingesetzt werden dürfen, da die Gefahr besteht, daß eine Membran beschädigt wird und Öl ausläuft. Beispiele für solche Anwendungen finden sich insb. in der Lebensmittelindustrie und bei der Herstellung und Lagerung von Lacken.

Es ist eine Aufgabe der Erfindung, einen Relativdrucksensor anzugeben, der gegenüber Verunreinigungen und/oder Feuchtigkeit geschützt ist und ohne Ölfüllung auskommt.

Hierzu besteht die Erfindung in einem Relativdrucksensor mit
- einer gasgefüllten Meßkammer,
   -- die mit einer druckempfindlichen Meßmembran verschlossen ist,
   -- auf deren Außenseite im Betrieb ein zu messender Druck einwirkt,
- einem gasgefüllten kompressiblen federelastischen Balg,
   -- auf den im Betrieb von außen ein Referenzdruck einwirkt,
   -- dessen Innenvolumen vom Referenzdruck abhängt und
   -- der zur Anpassung eines in der Meßkammer herrschenden Innendrucks an den Referenzdruck mit der Meßkammer verbunden ist, und
- einem Wandler zur Umwandlung einer druckabhängigen Auslenkung der Meßmembran in eine elektrische Meßgröße.

Gemäß einer Weiterbildung der Erfindung besteht der Balg aus zwei an deren äußeren Rand miteinander verbundenen Membranen, vorzugsweise aus Wellmembranen.

Gemäß einer anderen Weiterbildung ist die Meßmembran auf einem Grundkörper angeordnet, der Grundkörper weist eine durchgehende Bohrung auf und der Balg ist eine Wellmembran, die mit einem äußeren Rand mit einer von der Meßmembran abgewandten Rückseite des Grundkörpers verbunden ist und die die Bohrung überdeckt.

Gemäß einer weiteren Weiterbildung weist der Balg eine Steifigkeit auf, die klein ist im Vergleich zu einer Steifigkeit der Meßmembran.

Gemäß einer Ausgestaltung besteht der Balg aus einem Edelstahl oder aus einer Kupfer-Berrylium-Legierung.

Die Erfindung und weitere Vorteile werden nun anhand der Figuren der Zeichnung, in denen zwei Ausführungsbeispiele dargestelltsind, näher erläutert. Gleiche Elemente sind in den Figuren mit den gleichen Bezugszeichen versehen.
- Fig. 1: zeigt einen Schnitt durch einen Relativdrucksensor mit einem aus zwei Membranen bestehenden Balg ; und
- Fig. 2: zeigt eine Druckmeßzelle mit einem eine Membran aufweisenden Balg.

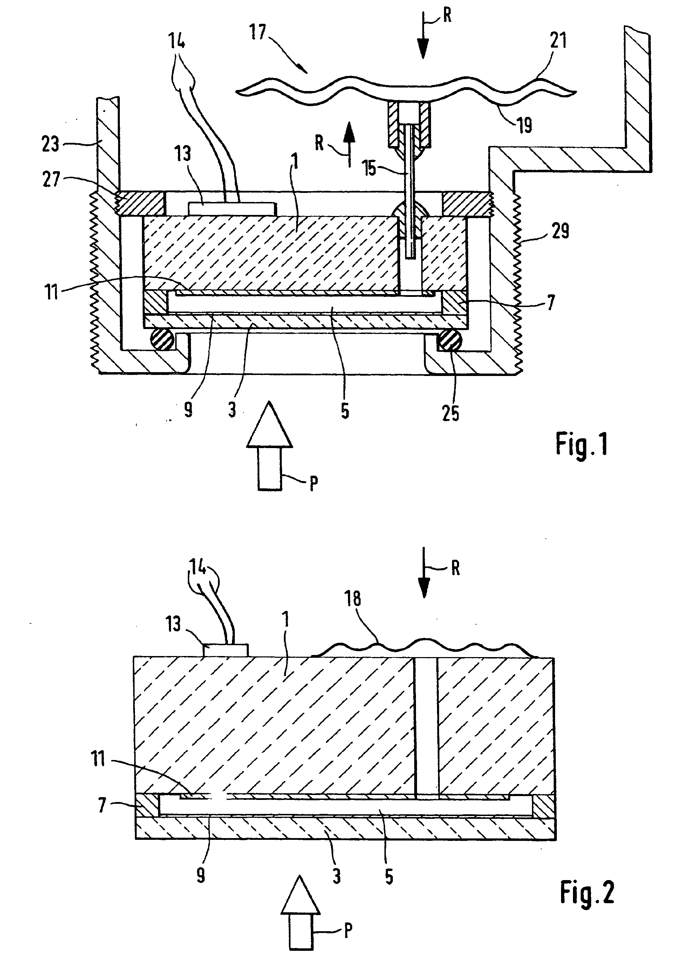

In Fig. 1 ist ein Schnitt durch einen erfindungsgemäßen Relativdrucksensor dargestellt. Das Herzstück des Relativdrucksensors ist in dem gezeigten Ausführungsbeispiel eine kapazitive keramische Druckmeßzelle. Diese weist einen Grundkörper 1 und eine Meßmembran 3 auf. Der Grundkörper 1 besteht z.B. aus Keramik. Die Meßmembran 3 kann ebenfalls aus Keramik bestehen oder z.B. aus Saphir. Die Meßmembran 3 und der Grundkörper 1 sind an deren Rand unter Bildung einer Meßkammer 5 mittels einer Fügestelle 7 druckdicht und gasdicht miteinander verbunden. Die Meßmembran 3 ist druckempfindlich, d.h. ein auf sie einwirkender Druck bewirkt eine Auslenkung der Meßmembran 3 aus deren Ruhelage.. Die Meßmembran 3 verschließt die Meßkammer 5.

Auf einer Innenseite der Meßmembran 3 ist eine Elektrode 9 und auf einer gegenüberliegenden Innenseite des Grundkörpers 1 ist mindestens eine Gegenelektrode 11 angeordnet. Die Elektrode 9 der Meßmembran 3 ist durch die Fügestelle 7 hindurch elektrisch kontaktiert und außerhalb z.B. mit Masse verbunden. Die Gegenelektrode 11 des Grundkörpers 1 ist durch den Grundkörper 1 hindurch zu dessen Außenseite hin elektrisch kontaktiert und führt zu einer auf dem Grundkörper 1 angeordneten elektronischen Schaltung 13. Elektrode 9 und Gegenelektrode 11 bilden einen Kondensator und die elektronische Schaltung 13 formt die Kapazitätsänderungen des Kondensators z.B. in eine sich entsprechend ändernde elektrische Spannung um.

Im Betrieb wirkt auf eine Außenseite der Meßmembran 3 ein zu messender Druck P ein. Dies ist in Fig. 1 durch einen Pfeil symbolisch dargestellt. Der Druck P bewirkt eine druckabhängige Auslenkung der Meßmembran 3 die von einem Wandler in eine elektrische Meßgröße umgewandelt wird. Bei dem beschriebenen Ausführungsbeispiel umfaßt der Wandler die Elektrode 9, die Gegenelektrode 11 und die elektronische Schaltung 13 und die elektrische Meßgröße ist z.B. eine Spannung. De Meßgröße steht über Anschlußleitungen 14 einer weiteren Verarbeitung und/oder Auswertung zur Verfügung.

Anstatt der beschriebenen kapazitiven keramischen Meßzelle kann z.B. auch eine piezoresistive Meßzelle verwendet werden. Bei diesen Arten von Meßzellen weist der Wandler auf der Meßmembran aufgebrachte Dehnmeßstreifen auf. Die Meßkammer kann auch bei diesen Meßzellen durch einen Grundkörper, auf dem die Meßmembran mit deren äußerem Rand befestigt wird, und die Meßmembran selber gebildet sein.

Der Grundkörper 1 weist eine durchgehende Bohrung auf, in die ein Röhrchen 15 eingeführt ist. An einem grundkörperabgewandten Ende des Röhrchens 15 ist ein federelastischer Balg 17 angeordnet, auf den im Betrieb von außen allseitig ein Referenzdruck R einwirkt. Dies ist in Fig. 1 durch Pfeile gekennzeichnet. Der Innenraum des Balgs 17 ist über das Röhrchen 15 mit der Meßkammer 5 verbunden. Die Meßkammer 5, das Röhrchen 15 und der Balg 17 sind mit einem Gas, z.B. mit Luft, gefüllt. Der gasgefüllte Raum ist hermetisch dicht verschlossen und somit sicher vor Feuchtigkeit und/oder Verunreinigungen geschützt.

Der Balg 17 ist kompressibel. Folglich ist dessen Innenvolumen abhängig von dem von außen auf den Balg 17 einwirkenden Referenzdruck R. Steigt der Referenzdruck R wird der Balg 17 komprimiert und der Druck im Inneren des Balgs 17 steigt an bis sich am Balg 17 ein Kräftegleichgewicht einstellt. Da der Innenraum des Balgs 17 mit der Meßkammer 3 über das Röhrchen 15 verbunden ist, ist ein in der Meßkammer 5 herrschender Innendruck gleich dem Druck, der sich im Inneren des Balgs 17 in Abhängigkeit vom Referenzdruck R einstellt.

In dem in Fig. 1 dargestellten Ausführungsbeispiel besteht der Balg 17 aus zwei an deren äußeren Rand miteinander verbundenen dünnen Membranen 19, 21. Die beiden Membranen 19, 21 sind vorzugsweise, wie in Fig. 1 dargestellt als Wellmembranen ausgebildet. Dies bietet den Vorteil, daß das Innenvolumen des Balgs 17 bei einem mittleren Referenzdruck verhältnismäßig gering ist, der Balg 17 aber durch eine Auslenkung beider Membranen voneinander weg sein Innenvolumen deutlich vergrößern kann. Das bedeutet zum einen, daß nur eine geringe Gasmenge vorhanden ist, die sich mit der Temperatur ausdehnt, und zum anderen, daß eine temperaturbedingte Gasausdehnung von dem Balg 17 aufgenommen wird, ohne daß sich der Druck der sich im Inneren des Balgs 17 und damit in der Meßkammer 5 bei einem bestimmten Referenzdruck R einstellt wesentlich ändert.

Der Relativdrucksensor weist ein Gehäuse 23 auf in das die kapazitive keramische Meßzelle eingespannt ist. Hierzu weist das Gehäuse 23 eine Öffnung mit einer sich radial nach innen erstreckenden Schulter auf, auf der die Meßmembran 3 mit einem äußeren druckunempfindlichen Rand unter Zwischenfügung einer Dichtung 25, z.B. eines O-Rings, aufliegt. Auf einer meßmembran-abgewandten Seite der Meßzelle ist ein Gewindering 27 in das Gehäuse 23 eingeschraubt, durch den die Meßzelle gegen die Dichtung 25 gepreßt wird. Zur Befestigung des Sensors an einem Meßort ist an dem Gehäuse 23 ein Außengewinde 29 vorgesehen. Andere Arten der Befestigung sind ebenfalls einsetzbar.

In Fig. 2 ist eine weitere Druckmeßzelle mit einem gasgefüllten federelastischen Balg 18 dargestellt. Die Druckmeßzelle kann auf die gleiche Weise in ein Gehäuse eingebaut sein, wie die in Fig. 1 dargestellte Druckmeßzelle. Die beiden Druckmeßzellen unterscheiden sich lediglich durch die Form und die Anordnung des Balgs 17 bzw. 18. Auch bei dem Ausführungsbeispiel von Fig. 2 weist der Grundkörper 1 eine durchgehende Bohrung auf. Der Balg 18 besteht in einer dünnen leicht gewölbten Wellmembran. Ein äußerer Rand des Balgs 18 ist mit einer von der Meßmembran 3 abgewandten Rückseite des Grundkörpers 1 verbunden. Die Wellmembran schließt mit dem Grundkörper 1 ein geringes Volumen ein und überdeckt die durchgehende Bohrung. Die Innenräume des Balgs 18, der Bohrung und der Meßkammer 5 bilden einen einzigen gasdicht verschlossenes Hohlraum, der mit einem Gas, z.B. Luft gefüllt ist. Der Referenzdruck wirkt von außen auf den Balg 18 ein. Die Funktionsweise entspricht der des zuvor beschriebenen Ausführungsbeispiels.

Es ist jeweils von Vorteil, wenn der Balg 17, 18 eine Steifigkeit aufweist, die klein ist im Vergleich zu einer Steifigkeit der Meßmembran 3. Die Steifigkeit von Meßmembran 3 und Balg 17, 18 wird durch die Materialeigenschaften der verwendeten Werkstoffe, deren Dicke und deren Formgebung bestimmt. Die Empfindlichkeit des Relativdrucksensors und damit die bestenfalls erzielbare Meßgenauigkeit ist durch die Steifigkeit der Meßmembran 3 begrenzt. Je geringer die Steifigkeit des Balgs 17, 18 ist, um so weicher ist er, um so genauer folgt der Innendruck dem Referenzdruck R und um so geringer sind die Auswirkungen des Membranbalgs 17 bzw. 18 auf ein Meßsignal. Ist die Steifigkeit des Balgs 17,18 gering im Vergleich zu der der Meßmembran 3, so folgt der Innendruck dem Referenzdruck R mit einer Genauigkeit, die innerhalb der durch die Meßmembran 3 vorgegebenen Meßgenauigkeit liegt.

Besonders geeignet sind federelastische Materialien, insb. Metalle wie z.B. eine Kupfer-Berrylium-Legierung. Es ist aber auch ein Edelstahl oder ein federelastischer Kunstoff einsetzbar. Solche federelastischen Materialien bieten weiter den Vorteil einer sehr geringen Hysterese bei Verformungen.

Die Steifigkeit von Balg 17, 18 und Meßmembran 3 kann in Form einer Druck/Volumen-Konstante quantitativ angegeben werden. Es wird dabei ein einwirkender Druck auf eine durch diesen Druck bedingte Änderung des Balginnenvolumens bzw. des Meßkammerinnenvolumens bezogen. Die Druck/Volumen-Konstante kann entweder experimentel oder näherungsweise rechnerisch bestimmt werden. Bei geeigneter Dimensionierung kann die Druck/Volumen-Konstante um einen Faktor 1000 bis 10000 geringer sein als die der Meßmembran 3.

Ein Relativdrucksensor gemäß dem Ausführungsbeispiel von Fig. 1, der z.B. für einen Meßbereich von 40 kPa (= 400 mbar) ausgelegt ist, weist bei Verwendung einer kreisscheibenförmige Meßmembran 3 aus einer Aluminuimoxid-Keramik mit einer Dicke von 0,25 mm und einem Durchmesser von 25 mm eine Druck/Volumen-Konstante von ungefähr 30 kPa/mm³ (= 300 mbar/mm³) auf. Demgegenüber weist der Balg 17 bei einem Durchmesser von 23 mm und einer Dicke der Membranen 19, 21 von 20 µm eine Druck/Volumen-Kontante von ungefähr 5 Pa/mm³ (= 0,05 mbar/mm³) auf, wobei die Membranen 19, 21 als Wellmembranen ausgebildet sind und aus Kupfer-Berrylium-Legierung bestehen.

Wie bei Relativdrucksensoren generell üblich, wird auch bei den erfindungsgemäßen Relativdrucksensoren eine Kalibration über Druck und Temperatur vorgenommen werden. Dabei wird werkseitig von einem vorgegebenen mittleren Referenzdruck, z.B. 1,013 10⁵ Pa (= 1013 mbar), ausgegangen. Aufgrund der Federelastizität und der geringen Steifigkeit der Bälge 17, 18 können diese Relativdrucksensoren relativ große Abweichungen eines mittleren Referenzdrucks von dem vorgegebenen mittleren Referenzdruck aufnehmen, ohne daß ein linearer Bereich der Sensorkennlinie verlassen wird. Innerhalb dieses linearen Bereichs genügt eine Einstellung des Nullpunkts des Relativdrucksensors Vorort, um die gleiche Meßgenauigkeit zu erhalten wie sie bei dem vorgegebenen mittleren Referenzdruck erzielt wird. Ein auf Meereshöhe kalibrierter Relativdrucksensor kann somit ohne Genauigkeitseinbußen auch in den Bergen, z.B. in einer Höhe von 2000 m eingesetzt werden.

## Patentansprüche

1. Relativdrucksensor mit
- einer gasgefüllten Meßkammer (5), die mit einer druckempfindlichen Meßmembran (3) verschlossen ist,
-- auf deren Außenseite im Betrieb ein zu messender Druck (P) einwirkt,
- einem gasgefüllten kompressiblen federelastischen Balg (17, 18),
-- auf den im Betrieb von außen ein Referenzdruck (R) einwirkt,
-- dessen Innenvolumen vom Referenzdruck (R) abhängt und
- der zur Anpassung eines in der Meßkammer (5) herrschenden Innendrucks an den Referenzdruck (R) mit der Meßkammer (5) verbunden ist, und
- einem Wandler zur Umwandlung einer druckabhängigen Auslenkung der Meßmembran (3) in eine elektrische Meßgröße.

2. Relativdrucksensor nach Anspruch 1, bei dem der Balg (17) aus zwei an deren äußeren Rand miteinander verbundenen Membranen (19, 21) besteht.

3. Relativdrucksensor nach Anspruch 2, bei dem die Membranen (19, 21) Wellmembranen sind.

4. Relativdrucksensor nach Anspruch 1, bei dem
- die Meßmembran (3) auf einem Grundkörper (1) angeordnet ist,
- der Grundkörper (1) eine durchgehende Bohrung aufweist und
- der Balg (18) eine Wellmembran ist,
-- die mit einem äußeren Rand mit einer von der Meßmembran (3) abgewandten Rückseite des Grundkörpers (1) verbunden ist und
-- die die Bohrung überdeckt.

5. Relativdrucksensor nach einem der
vorangehenden Ansprüche, bei dem der Balg (17, 18) eine Steifigkeit aufweist, die klein ist im Vergleich zu einer Steifigkeit der Meßmembran (3).

6. Relativdrucksensor nach einem der
vorangehenden Ansprüche, bei dem der Balg (17, 18) aus einem Edelstahl oder aus einer Kupfer-Berrylium-Legierung besteht.

## Claims

1. Relative-pressure sensor having
- a gas-filled measuring chamber (5), which is sealed with a pressure-sensitive measuring diaphragm (3),
-- on the outer side of which a pressure (P) to be measured acts during operation,
- a gas-filled compressible resilient bellows (17, 18),
-- on which a reference pressure (R) acts from outside during operation,
-- whose internal volume depends on the reference pressure (R), and
-- which is connected to the measuring chamber (5) in order to adapt an internal pressure prevailing in the measuring chamber (5) to the reference pressure (R), and
- a transducer for converting a pressure-dependent deflection of the measuring diaphragm (3) into an electric measured variable.

2. Relative-pressure sensor according to Claim 1, in which the bellows (17) comprises two diaphragms (19, 21) interconnected at their outer edge.

3. Relative-pressure sensor according to Claim 2, in which the diaphragms (19, 21) are corrugated diaphragms.

4. Relative-pressure sensor according to Claim 1, in which
- the measuring diaphragm (3) is arranged on a basic body (1),
- the basic body (1) has a continuous bore, and
- the bellows (18) is a corrugated diaphragm
-- which is connected with an outer edge to a rear side of the basic body (1) averted from the measuring diaphragm (3) and
-- covers the bore.

5. Relative-pressure sensor according to one of the preceding claims, in which the bellows (17, 18) has a stiffness which is small in comparison with a stiffness of the measuring diaphragm (3).

6. Relative-pressure sensor according to one of the preceding claims, in which the bellows (17, 18) is made of a high-grade steel or a copper-beryllium alloy.

## Revendications

1. Capteur de pression relative avec
- une chambre de mesure (5) remplie de gaz,
- qui est obturée par une membrane de mesure (3) sensible à la pression,
-- une pression à mesurer (P) agissant sur sa face extérieure lorsque le système est en fonctionnement,
- un soufflet élastique (17, 18), compressible, rempli de gaz,
-- sur lequel une pression de référence (R) agit depuis l'extérieur lorsque le système est en fonctionnement,
- dont le volume intérieur dépend de la pression de référence (R) et
-- qui est relié à la chambre de mesure (5) en vue de l'adaptation d'une pression intérieure régnant dans la chambre de mesure (5), à la pression de référence (R), et
- un convertisseur destiné à la conversion d'une déviation de la membrane de mesure (3), variable en fonction de la pression, en une grandeur de mesure électrique.

2. Capteur de pression relative selon la revendication 1, pour lequel le soufflet (17) est composé de deux membranes (19, 21) reliées entre elles par leur bord extérieur.

3. Capteur de pression relative selon la revendication 2, pour lequel les membranes (19, 21) sont des membranes ondulées.

4. Capteur de pression relative selon la revendication 1, pour lequel
- la membrane de mesure (3) est disposée sur un corps de base (1),
- le corps de base (1) présente un alésage traversant
- le soufflet (18) est une membrane ondulée,
-- qui est reliée par un bord extérieur à la face arrière du corps de base (1), située à l'opposé de la membrane de mesure (3) et
-- qui recouvre l'alésage.

5. Capteur de pression relative selon l'une des revendications précédentes, pour lequel le soufflet (17, 18) présente une rigidité, qui est faible comparée à une rigidité de la membrane de mesure (3).

6. Capteur de pression relative selon l'une des revendications précédentes, pour lequel le soufflet (17, 18) est en acier spécial ou en alliage de cuivre-béryllium.
